# EUROPEAN PATENT SPECIFICATION

(11) **EP 1 810 577 B1**
(45) Date of publication and mention of the grant of the patent: **30.09.2009**
(21) Application number: 07250157.0
(22) Date of filing: 16.01.2007
(51) Int. Cl.: A23K 1/00, A23N 17/00, A23P 1/12

(54) **Apparatus for manufacturing food**
Vorrichtung zur Herstellung von Lebensmitteln
Dispositif pour la production des denrées alimentaires

(30) Priority: 23.01.2006 GB 0601353
(43) Date of publication of application: 25.07.2007
(73) Proprietor: MARS, INCORPORATED, McLean,VA 22103 (US)
(72) Inventor: Smith, Gordon Macdonald Bodie, Mount Huddersfield HD3 3XU (GB); Harris, Andrew Mark, Meersbrook Shefield S8 9HY (GB)
(74) Representative: Cockerton, Bruce Roger

(56) References cited:
- EP-A2- 0 234 889
- WO-A-00/32057
- WO-A-01/41995
- US-A- 4 750 842

## Description

### FIELD OF THE INVENTION

The present invention relates to apparatus and methods for manufacturing food, in particular pet food, and in particular apparatus and methods involving extruders.

### BACKGROUND OF THE INVENTION

Cavity transfer mixers (CTMs) are known and have been employed, particularly in the plastics industry, for a number of years. CTMs allow efficient mixing of additives, e.g. colourings, into a product and are particularly useful in extrusion processes. Typically a CTM is bolted on to the end of an extruder screw in order to mix an additive into the stream of product being output from the extruder screw.

EP 0 048 590 discloses a CTM which comprises a hollow cylindrical stator member, and a cylindrical rotor member positioned for rotation within the stator. The facing cylindrical surfaces of the rotor and stator carry respective pluralities of parallel, circumferentially extending rows of cavities. The cavities in adjacent rows on the stator are circumferentially offset, as are the cavities in adjacent rows on the rotor. The rows of cavities on the stator and rotor are also axially offset.

EP 0 234 889 discloses apparatus for treating a viscous material, particularly an insulating plastics material for coating wires. Material is fed from an extruder to a gear pump. The output from the gear pump is divided into at least two streams, one of which is fed to a CTM. Colourant is injected into one of the streams either before or at the mixer and the two streams are recombined downstream of the mixer. The CTM and the extruder are driven independently.

US 4,750,842 also discloses a mixing apparatus employing a CTM. Material is fed from an internal mixer to an extruder and then on to a CTM. Material traversing the length of the extruder passes directly into the CTM and an additive is injected into the CTM for mixture with material output from the extruder. A motor operates the internal mixer, extruder and CTM and separately drives and varies the speed of the CTM whereby the CTM can be driven at a higher speed than the extruder.

### SUMMARY OF THE INVENTION

The present invention provides a method of manufacturing food comprising:
extruding first and second streams of food product respectively from first and second outputs of an extruder; and
passing the first stream of food product through a first cavity transfer mixer.

The present invention also provides an apparatus for manufacturing food comprising:
an extruder having first and second outputs for outputting first and second streams of food product respectively; and
a first cavity transfer mixer having a first input connected to the first output of the extruder.

The extruder may comprise a twin screw extruder.

The second output may be arranged such that the second stream of food product passes through a hollow channel through the centre of the first cavity transfer mixer. In such a way, the first cavity transfer mixer may be arranged so that the first stream of food product exits the first cavity mixer and coats the second stream of food product so as to produce a co-axial food product.

Alternatively, the second output may be arranged such that the second stream of food product passes around the outside of the first cavity transfer mixer. In such a way, the second stream of food product may be arranged to coat the first stream of food product exiting the first cavity transfer mixer so as to produce an alternative coaxial food product.

Alternatively, the apparatus may be arranged so that the first stream and second stream are output as two side-by-side streams, each stream producing a separate product.

The first cavity transfer mixer may be capable of reducing the density of the first stream of product. In order to reduce the density of the first stream of product, the first cavity transfer mixer may comprise a hollow cylindrical stator and a cylindrical rotor arranged for rotation within the stator, each of the facing cylindrical surfaces of the rotor and stator including a plurality of cavities arranged such that the temperature and pressure exerted on the first stream of food product is increased to such an extent that the first stream of food product has a lower density upon exiting an output of the apparatus than upon entering the cavity transfer mixer. The first cavity mixer may be used to produce a foamed material for coating a second stream of material extruded through the centre of the cavity transfer mixer and thus producing a dual-texture coaxial product having a dense central portion and a relatively less dense coating. Alternatively, the apparatus may be arranged so that the first stream and second stream are output as two side-by-side streams to produce two separate products of different textures. Alternatively, the foamed material may be coated with the second stream of material which is more dense than the foamed material.

The first cavity transfer mixer may be adapted to reduce the density of the product by minimising the tolerances between the stator and the rotor in order to increase the temperature and pressure exerted on the first stream of food product.

The apparatus may include means for varying the product throughput rate. Preferably, the means allows real time adjustment so that the product throughput rate can be changed whilst the apparatus is running. The means may be either internal or external to the first cavity transfer mixer. The means may comprise a choke ring positioned at the input of the first cavity transfer mixer.

The speed at which the rotor of the first cavity transfer mixer rotates may be variable so as to change the product throughput rate.

Independent heating and/or cooling may be applied to the first cavity transfer mixer to decrease or increase the density of the product and change the texture of the product.

The first cavity transfer mixer may have an input through which an additive can be added to the first stream of food product. The additive may comprise, for example, a food colouring, a food flavouring or a fat or oil.

The additive can be chosen so that the final product is a nutritionally complete product. For example, an oil or fat could be added or a vitamin or mineral supplement. Traditionally it has been difficult to add an oil or fat to an extrudate mixture because the added oil or fat has a lubricating effect which causes the mixture to shoot through the extruder without being thoroughly mixed or processed. The prior art has attempted to address this problem by spraying the oil or fat onto the extruded product as a separate step. However, this adds another step to the process and is consequently inefficient. The present invention allows an oil or fat to be added to the food product effectively and efficiently.

By adding an additive to the first stream, the first stream can be output with a first property (e.g. a first colour) and the second stream can be output with a second property (e.g. a second colour). The two streams can be combined into a single product, for example a coaxial product, or can be retained as separate products.

The apparatus may further comprise a second mixer, such as a second cavity transfer mixer or a second extruder, having a second input connected to the second output of the first extruder. The second cavity transfer mixer may have any of the functions described above in connection with the first cavity transfer mixer. The function of the second cavity transfer mixer may be the same as, or different to, that of the first cavity transfer mixer.

In addition, the apparatus may have a third output for providing a third stream of food product. One embodiment of the present invention provides a means to simultaneously extrude three different food products using two CTMs and a twin screw extruder. Thus, three streams of extrudate exit the extruder, a first and second stream which enters a first and second cavity transfer mixer, as described above, and a third stream which exits the extruder without further treatment.

A third mixer, such as a third cavity transfer mixer or a third extruder, with a third input may optionally be connected to the third output of the extruder. The third cavity transfer mixer may have any of the functions described above in connection with the first cavity transfer mixer. The function of the third cavity transfer mixer may be the same as, or different to, that of the first and/or second cavity transfer mixer.

Where the apparatus is provided with more than one cavity transfer mixer, it may be possible to set the speed of rotation of the rotor of at least one of the cavity transfer mixers to be different to the speed of rotation of the rotor of at least one of the other cavity transfer mixers so that the product throughput rate of each cavity transfer mixer can be chosen.

Each stream of food product may be extruded directly from its respective output of the extruder.

In a further embodiment, the apparatus comprises a fourth output stream. The fourth output stream may comprise extrudate which exits the extruder without further treatment. In this embodiment, the third and fourth output streams of untreated extrudate may be combined with the first and second output streams which have passed through the first and second mixers, respectively, to produce two bi-phase product, optionally wherein the two phases of each product are in coaxial arrangement.

The second cavity transfer mixer may have an input through which an additive can be added to the second stream of food product, as described in respect of the first mixer. A third cavity transfer mixer may have an input through which an additive can be added to the third stream of food product, as described in respect of the first mixer.

When the apparatus includes three outputs, the three extruded food products may be combined into a single final product or may be retained as three separate final products. For example, the three extruded food products may be intertwined into a single product. Alternatively, three separate products, for example beef, lamb and chicken flavoured dog chews, could be produced from the same apparatus.

In a further alternative embodiment, only two of the three streams may be combined. Thus, in one embodiment a first output stream passes through a first mixer, as described above, and is combined into a single food product with a second output stream that has passed through a second mixer. A third output stream is retained a separate final product.

Alternatively, the first output stream passes through a first mixer, as described above, and is combined into a single, optionally coaxial, food product with the third output stream of untreated extrudate. The second output stream passes through a second mixer and is output as a separate final product.

### BRIEF DESCRIPTION OF THE DRAWINGS

Embodiments of the present invention will now be described with reference to the enclosed drawings in which:
Figure 1 shows an apparatus according to a first embodiment of the present invention;
Figure 2 shows a cut-through portion of a cavity transfer mixer for use in the present invention;
Figure 3 shows an apparatus according to a second embodiment of the present invention;
Figure 4 shows an apparatus according to a third embodiment of the present invention; and
Figure 5 shows an example of a food product which can be produced using an apparatus according to the present invention.

### DETAILED DESCRIPTION OF THE DRAWINGS

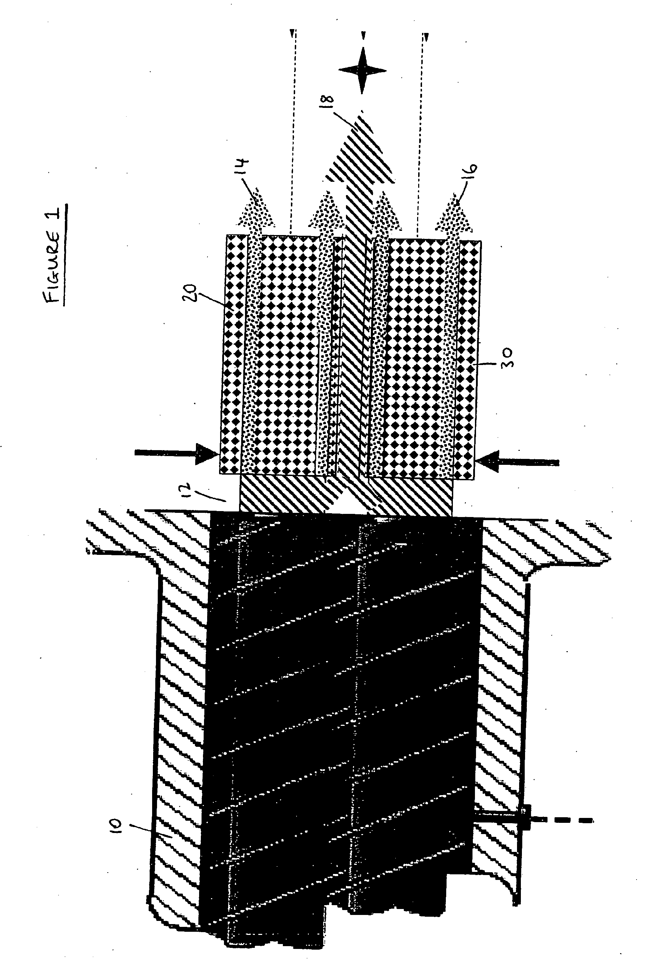

Figure 1 shows apparatus according to an embodiment of the present invention in which the output 12 of a twin screw extruder (TSE) 10 is split into three streams. A first stream 14 of product output from the TSE 10 is connected to a first cavity transfer mixer 20 and a second stream 16 of product output from the TSE 10 is connected to a second cavity transfer mixer 30. A third stream 18 of product output from the TSE 10 is not channelled through a cavity transfer mixer.

The first and second cavity transfer mixers 20 and 30 may be used to mix additives into the first and second streams of product output from the TSE 10. Alternatively, the first and second cavity transfer mixers 20 and 30 may be used to exert a pressure on the first and second streams of product output from the extruder in order to change the density of the first and second streams of product. For example, pressure exerted on the product as it passes through the cavity transfer mixer may cause the product to foam as it exits the cavity transfer mixer, thereby creating variations in texture.

The three streams of product exiting the apparatus may be retained as separate products of the apparatus. Alternatively, two or more of the three streams of product may be combined into a single product with an appealing appearance. For example an intertwined strand of two or three different colour materials.

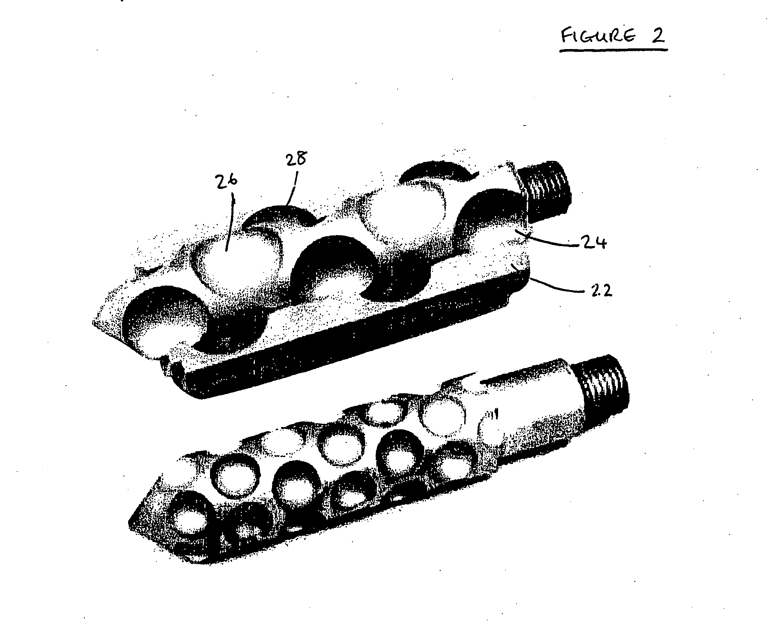

As can be seen from figure 2, each of the cavity transfer mixers 20, 30 comprises a hollow cylindrical stator 22 and a cylindrical rotor 24 arranged for rotation within the stator 22, each of the facing cylindrical surfaces of the rotor 24 and stator 22 includes a plurality of cavities 26, 28. In order to output a foamed product, the rotor 24 and stator 22 are arranged such that the temperature and pressure exerted on the stream of food product passing through the cavity transfer mixer is increased. The pressure on the food product is increased by minimising the clearance between the stator 22 and the rotor 24 in order to increase the temperature and pressure exerted on the first stream of food product. For example, the distance between the cylindrical surfaces of the stator 22 and rotor 24 may be set at approximately 1mm.

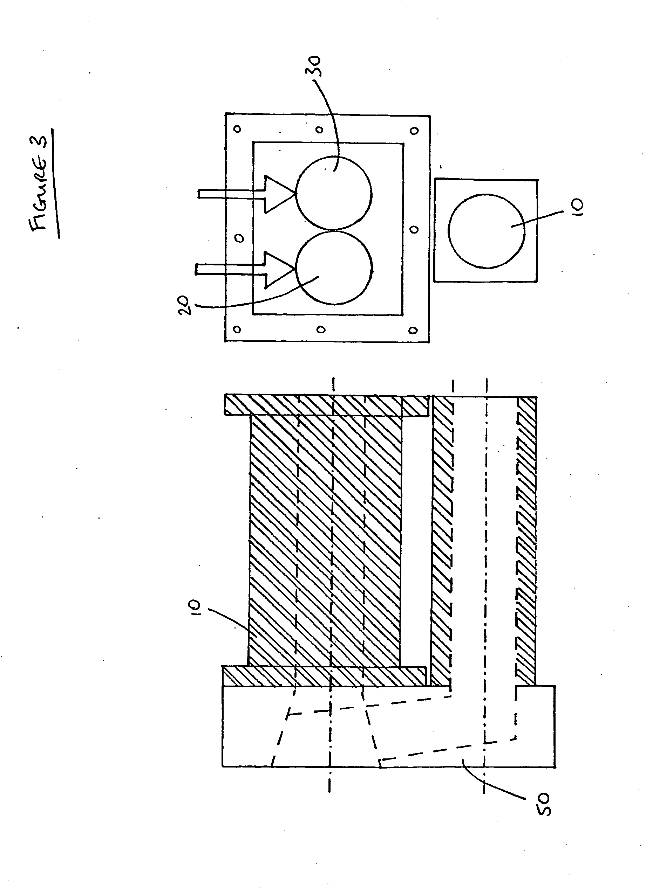

Figure 3 shows an alternative embodiment of the present invention in which the output of an extruder 10 is attached to a trinocular barrel 50. Each of the three outputs of the trinocular barrel is connected to a separate cavity transfer mixer 20, 30 and 40.

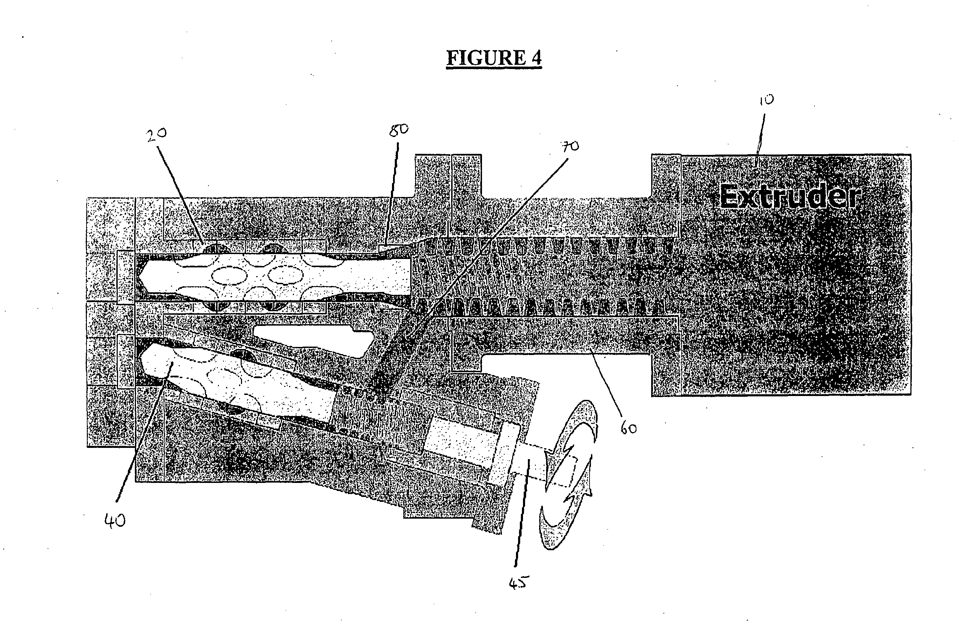

Figure 4 shows an alternative embodiment of the present invention similar to that shown in figure 3 in which the output of an extruder 10 is attached to a binocular barrel 60. Each of the two outputs of the binocular barrel 60 is connected to a separate cavity transfer mixer of which only one, 20, is shown (the second cavity transfer mixer is behind the mixer 20). A dump channel 70 from the input of the two cavity transfer mixers provides a path for product from the extruder to be fed into a third cavity transfer mixer 40.

At least one of the three cavity transfer mixers 20, 30 and 40 in figures 3 and 4 can be used to mix in an additive such as a food colouring or a food flavouring. Alternatively or in addition, at least one of the three cavity transfer mixers 20, 30 and 40 can be used to change the density and hence the texture of the product passing therethrough. For example, as described above, the pressure in the cavity transfer mixture can be increased by minimising the distance between the cylindrical surfaces of the rotor and stator. Such an increase in pressure can result in foaming of the product exiting the cavity transfer mixture.

Each of the three cavity transfer mixers can function with different tolerances and sizes and at different temperatures, resulting in different products. One or more of the cavity transfer mixers can be independently heated or cooled to change the density of the product exiting the cavity transfer mixer. Such independent heating and/or cooling could be used to enhance textural differences between the streams of product.

One or more of the three cavity transfer mixers can function at different rotation speeds to the other of the three cavity transfer mixers, thus allowing the texture of the product to be altered. For example, in figure 4, drive 45 of cavity transfer mixer 40 can be rotated at a different rate to the rotors of cavity transfer mixers 20 and 30 allowing for the product texture from barrel 40 to differ significantly from that of the products from barrels 20 and 30.

One or more of the inputs of the three cavity transfer mixers can be provided with a choke ring 80 to alter the cross-sectional area of the input to the cavity transfer mixer and affect the product throughput level of the cavity transfer mixer.

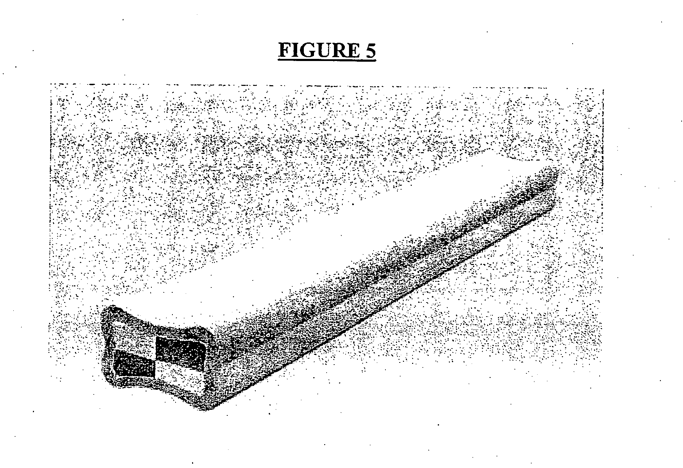

The embodiments shown in figures 3 and 4 can be used to produce a single multicomponent product have multiple colours, flavours and/or textures such as that shown in figure 5. For example, one of the cavity transfer mixers may operate at a higher temperature or higher rotation speed which would allow a "marshmallow" type product to result involving a layer akin to the foam, a layer akin to the biscuit and a "chocolate" coating.

Alternatively the embodiment shown in figure 3 can be used to produce three different products which can be packaged together in one pack. The three different products may differ in their colours, flavours, textures and/or shapes. Therefore, a single pack of food products can be produced from a single apparatus which contains three varieties of product.

Accordingly, the present invention provides for simultaneous production of multiple varieties of product. No separate storage of each product type is required before packaging, and no downstream mixing of products for a multi-variety pack is required; this leads to consistent varieties in packs. The present invention also provides for triple component products from one extruder which has low resource and space requirements.

It will be understood that the present invention has been described above purely by way of example, and that modifications of detail can be made within the scope of the invention as defined by the claims.

## Claims

1. A method of manufacturing food comprising:
extruding first and second streams of food product respectively from first and second outputs of an extruder; and
passing the first stream of food product through a first cavity transfer mixer.

2. The method of claim 1, further comprising:
passing the second stream of food product through a hollow channel through the centre of the first cavity transfer mixer.

3. The method of claim 2, further comprising:
coating the second stream of food product with the first stream of food product so as to provide a co-axial food product.

4. The method of any preceding claim, further comprising:
using the first cavity transfer mixer to reduce the density of the first stream of product.

5. The method of claim 4, further comprising:
exerting an increased temperature and pressure on the first stream of food product to such an extent that the first stream of food product has a lower density upon exiting the cavity transfer mixer than upon entering the cavity transfer mixer.

6. The method of any preceding claim, further comprising:
adding an additive to the first stream of food product.

7. The method of claim 6, further comprising:
mixing the additive into the first stream of food product using the first cavity transfer mixer.

8. The method of any preceding claim, further comprising:
passing the second stream of food product through a second cavity transfer mixer.

9. The method of claim 8, further comprising:
using the second cavity transfer mixer to reduce the density of the second stream of product.

10. The method of claim 8 or claim 9, further comprising:
passing the first stream of product through the first cavity transfer mixer at a different speed to the speed at which the second stream of product is passed through the second cavity transfer mixer.

11. The method of claim 9, further comprising:
exerting an increased temperature and pressure on the second stream of food product to such an extent that the second stream of food product has a lower density upon exiting the second cavity transfer mixer than upon entering the second cavity transfer mixer.

12. The method of any preceding claim, further comprising:
adding an additive to the second stream of food product.

13. The method of any of claims 8 to 11, further comprising:
mixing an additive into the second stream of food product using the second cavity transfer mixer.

14. The method of any preceding claim, wherein the first stream of food product is extruded directly from the first output of the extruder.

15. The method of any preceding claim, wherein the second stream of food product is extruded directly from the second output of the extruder.

16. The method of any preceding claim, further comprising:
extruding a third stream of food product from a third output of the extruder.

17. The method of claim 16, wherein the third stream of food product is extruded directly from the third output, of the extruder.

18. The method of claim 16 or claim 17, further comprising:
passing the third stream of food product through a third cavity transfer mixer.

19. The method of claim 18, further comprising:
using the third cavity transfer mixer to reduce the density of the third stream of product.

20. The method of claim 18 or claim 19, further comprising:
passing the third stream of product through the third cavity transfer mixer at a different speed to the speed at which the first stream of product is passed through the first cavity transfer mixer.

21. The method of any of claims 17 to 20, further comprising:
exerting an increased temperature and pressure on the third stream of food product to such an extent that the third stream of food product has a lower density upon exiting the third cavity transfer mixer than upon entering the third cavity transfer mixer.

22. The method of any of claims 16 to 21, further comprising:
adding an additive to the third stream of food product.

23. The method of any of claims 18 to 20, further comprising:
mixing an additive into the third stream of food product using the third cavity transfer mixer.

24. Apparatus for manufacturing food comprising:
an extruder having first and second outputs for outputting first and second streams of food product respectively; and
a first cavity transfer mixer having a first input directly connected to the first output of the extruder.

25. The apparatus of claim 24 wherein the extruder comprises a twin screw extruder.

26. The apparatus of claim 24 or claim 25 wherein the second output is arranged such that the second stream of food product passes through a hollow channel through the centre of the first cavity transfer mixer.

27. The apparatus of claim 26 wherein the first cavity transfer mixer is arranged such that the first stream of food product exits the first cavity mixer and coats the second stream of food product so as to provide a co-axial food product.

28. The apparatus of any of claims 24 to 27 wherein the first cavity transfer mixer is capable of reducing the density of the first stream of product.

29. The apparatus of claim 28 wherein the first cavity transfer mixer comprises a hollow cylindrical stator and a cylindrical rotor arranged for rotation within the stator, each of the facing cylindrical surfaces of the rotor and stator including a plurality of cavities arranged such that the temperature and pressure exerted on the first stream of food product is increased to such an extent that the first stream of food product has a lower density upon exiting an output of the apparatus than upon entering the cavity transfer mixer.

30. The apparatus of claim 29 wherein the tolerances between the stator and the rotor are minimised in order to increase the temperature and pressure exerted on the first stream on food product.

31. The apparatus of any of claims 24 to 30, further comprising means for varying the product throughput rate.

32. The apparatus of claim 31, wherein the means for varying the product throughput rate can be used to vary the product throughput rate whilst the apparatus is running.

33. The apparatus of claim 31 or 32 wherein the means for varying the product throughput rate comprises a choke ring positioned at the input of the first cavity transfer mixer.

34. The apparatus of any of claims 24 to 29, further comprising a second mixer having a second input connected to the second output of the extruder.

35. The apparatus of claim 34, wherein the second mixer comprises a second cavity transfer mixer comprising a hollow cylindrical stator and a cylindrical rotor arranged for rotation within the stator, each of the facing cylindrical surfaces of the rotor and stator including a plurality of cavities arranged such that the temperature and pressure exerted on the second stream of food product is increased to such an extent that the second stream of food product has a lower density upon exiting an output of the apparatus than upon entering the second cavity transfer mixer.

36. The apparatus of any of claims 24 to 29 wherein the extruder has a third output for providing a third stream of food product.

37. The apparatus of claim 36, further comprising a third mixer having a third input connected to the third output of the extruder.

38. The apparatus of claim 36, wherein the third mixer comprises a third cavity transfer mixer comprising a hollow cylindrical stator and a cylindrical rotor arranged for rotation within the stator, each of the facing cylindrical surfaces of the rotor and stator including a plurality of cavities arranged such that the temperature and pressure exerted on the third stream of food product is increased to such an extent that the third stream of food product has a lower density upon exiting an output of the apparatus than upon entering the third cavity transfer mixer.

39. The apparatus of any of claims 24 to 38 wherein the first cavity transfer mixer has a fourth input through which an additive can be added to the first stream of food product.

40. The apparatus of claim 34 or 35 wherein the second mixer has a fifth input through which an additive can he added to the second stream of food product.

41. The apparatus of claim 37 or 38 wherein the third mixer has a sixth input through which an additive can be added to the third stream of food product.

42. The apparatus of any of claims 39 to 41 wherein at least one of the additives comprises a food colouring.

43. The apparatus of any of claims 39 to 42 wherein at least one of the additives comprises a food flavouring.

44. The apparatus of any of claims 39 to 43 wherein at least one of the additives comprises a fat or an oil.

## Patentansprüche

1. Verfahren zum Herstellen von Lebensmitteln, welches umfasst:
Extrudieren erster und zweiter Ströme von Lebensmittelprodukten aus ersten bzw. zweiten Auslässen eines Extruders; und
Führen des ersten Stroms eines Lebensmittelprodukts durch einen ersten Hohlraumtransfermischer.

2. Verfahren nach Anspruch 1, weiter umfassend:
Führen des zweiten Stroms eines Lebensmittelprodukts durch einen Hohlkanal durch die Mitte des ersten Hohlraumtransfermischers.

3. Verfahren nach Anspruch 2, weiter umfassend:
Beschichten des zweiten Stroms eines Lebensmittelprodukts mit dem ersten Strom eines Lebensmittelprodukts, um so ein koaxiales Lebensmittelprodukt bereitzustellen.

4. Verfahren nach irgendeinem vorangehenden Anspruch, weiter umfassend:
Verwenden des ersten Hohlraumtransfermischers, um die Dichte des ersten Stroms des Produkts zu reduzieren.

5. Verfahren nach Anspruch 4, weiter umfassend:
Anwenden einer erhöhten Temperatur und eines Drucks auf den ersten Strom eines Lebensmittelprodukts in einem solchen Ausmaß, dass der erste Strom des Lebensmittelprodukts eine geringere Dichte beim Austreten aus dem Hohlraumtransfermischer als beim Eintreten in den Hohlraumtransfermischer aufweist.

6. Verfahren nach irgendeinem vorangehenden Anspruch, weiter umfassend:
Zugeben eines Additivs zum ersten Strom eines Lebensmittelprodukts.

7. Verfahren nach Anspruch 6, weiter umfassend:
Mischen des Additivs in den ersten Strom eines Lebensmittelprodukts unter Verwendung des ersten Hohlraumtransfermischers.

8. Verfahren nach irgendeinem vorangehenden Anspruch, weiter umfassend:
Führen des zweiten Stroms eines Lebensmittelprodukts durch einen zweiten Hohlraumtransfermischer.

9. Verfahren nach Anspruch 8, weiter umfassend:
Verwenden des zweiten Hohlraumtransfermischers, um die Dichte des zweiten Stroms des Produkts zu reduzieren.

10. Verfahren nach Anspruch 8 oder Anspruch 9, weiter umfassend:
Führen des ersten Stroms des Produkts durch den ersten Hohlraumtransfermischer mit einer unterschiedlichen Geschwindigkeit als die Geschwindigkeit, mit welcher der zweite Strom des Produkts durch den zweiten Hohlraumtransfermischer geführt wird.

11. Verfahren nach Anspruch 9, weiter umfassend:
Anwenden einer erhöhten Temperatur und eines Drucks auf den zweiten Strom eines Lebensmittelprodukts in einem solchen Ausmaß, dass der zweite Strom des Lebensmittelprodukts eine geringere Dichte beim Austreten aus dem zweiten Hohlraumtransfermischer als beim Eintreten in den zweiten Hohlraumtransfermischer aufweist.

12. Verfahren nach irgendeinem vorangehenden Anspruch, weiter umfassend:
Zugeben eines Additivs zum zweiten Strom eines Lebensmittelprodukts.

13. Verfahren nach einem der Ansprüche 8 bis 11, weiter umfassend:
Mischen eines Additivs in den zweiten Strom eines Lebensmittelprodukts unter Verwendung des zweiten Hohlraumtransfermischers.

14. Verfahren nach irgendeinem vorangehenden Anspruch, wobei der erste Strom eines Lebensmittelprodukts direkt aus dem ersten Auslass des Extruders extrudiert wird.

15. Verfahren nach irgendeinem vorangehenden Anspruch, wobei der zweite Strom eines Lebensmittelprodukts direkt aus dem zweiten Auslass des Extruders extrudiert wird.

16. Verfahren nach irgendeinem vorangehenden Anspruch, weiter umfassend:
Extrudieren eines dritten Stroms eines Lebensmittelprodukts aus einem dritten Auslass des Extruders.

17. Verfahren nach Anspruch 16, wobei der dritte Strom eines Lebensmittelprodukts direkt aus dem dritten Auslass des Extruders extrudiert wird.

18. Verfahren nach Anspruch 16 oder Anspruch 17, weiter umfassend:
Führen des dritten Stroms eines Lebensmittelprodukts durch einen dritten Hohlraumtransfermischer.

19. Verfahren nach Anspruch 18, weiter umfassend:
Verwenden des dritten Hohlraumtransfermischers, um die Dichte des dritten Stroms des Produkts zu reduzieren.

20. Verfahren nach Anspruch 18 oder Anspruch 19, weiter umfassend:
Führen des dritten Stroms eines Produkts durch den dritten Hohlraumtransfermischer mit einer unterschiedlichen Geschwindigkeit als die Geschwindigkeit, mit welcher der erste Strom des Produkts durch den ersten Hohlraumtransfermischer geführt wird.

21. Verfahren nach einem der Ansprüche 17 bis 20, weiter umfassend:
Anwenden einer erhöhten Temperatur und eines Drucks auf den dritten Strom eines Lebensmittelprodukts in einem solchen Ausmaß, dass der dritte Strom des Lebensmittelprodukts eine geringere Dichte beim Austreten aus dem dritten Hohlraumtransfermischer als beim Eintreten in den dritten Hohlraumtransfermischer aufweist.

22. Verfahren nach einem der Ansprüche 16 bis 21, weiter umfassend:
Zugeben eines Additivs zum dritten Strom eines Lebensmittelprodukts.

23. Verfahren nach einem der Ansprüche 18 bis 20, weiter umfassend:
Mischen eines Additivs in den dritten Strom eines Lebensmittelprodukts unter Verwendung des dritten Hohlraumtransfermischers.

24. Vorrichtung zur Herstellung eines Lebensmittels, welche umfasst:
einen Extruder mit ersten und zweiten Auslässen zum Ausgeben erster beziehungsweise zweiter Ströme eines Lebensmittelprodukts; und
einen ersten Hohlraumtransfermischer mit einem ersten Einlass, der direkt mit dem ersten Auslass des Extruders verbunden ist.

25. Vorrichtung nach Anspruch 24, wobei der Extruder einen Doppelschneckenextruder umfasst.

26. Vorrichtung nach Anspruch 24 oder Anspruch 25, wobei der zweite Auslass so angeordnet ist, dass der zweite Strom eines Lebensmittelprodukts durch einen Hohlkanal durch die Mitte des ersten Hohlraumtransfermischers gelangt.

27. Vorrichtung nach Anspruch 26, wobei der erste Hohlraumtransfermischer so angeordnet ist, dass der erste Strom eines Lebensmittelprodukts den ersten Hohlraummischer verlässt und den zweiten Strom eines Lebensmittelprodukts so beschichtet, um ein koaxiales Lebensmittelprodukt bereitzustellen.

28. Vorrichtung nach einem der Ansprüche 24 bis 27, wobei der erste Hohlraumtransfermischer in der Lage ist, die Dichte des ersten Stroms des Produkts zu reduzieren.

29. Vorrichtung nach Anspruch 28, wobei der erste Hohlraummischer einen hohlen zylindrischen Stator und einen zylindrischen Rotor, der zur Rotation innerhalb des Stators angeordnet ist, umfasst, wobei jede der sich gegenüberliegenden zylindrischen Oberflächen des Rotors und des Stators eine Vielzahl von Hohlräumen einschließt, die so angeordnet sind, dass die Temperatur und der Druck, die auf den ersten Strom eines Lebensmittelprodukts ausgeübt werden, in einem solchen Ausmaß erhöht werden, dass der erste Strom eines Lebensmittelprodukts eine geringere Dichte beim Austreten aus einem Auslass der Vorrichtung als beim Eintreten in den Hohlraumtransfermischer aufweist.

30. Vorrichtung nach Anspruch 29, wobei die Toleranzen zwischen dem Stator und dem Rotor minimiert sind, um die Temperatur und den Druck, die auf den ersten Strom eines Lebensmittelprodukts ausgeübt werden, zu erhöhen.

31. Vorrichtung nach einem der Ansprüche 24 bis 30, weiter umfassend Mittel zum Variieren der Produktdurchsatzrate.

32. Vorrichtung nach Anspruch 31, wobei das Mittel zum Variieren der Produktdurchsatzrate verwendet werden kann, um die Produktdurchsatzrate zu variieren, während die Vorrichtung betrieben wird.

33. Vorrichtung nach Anspruch 31 oder 32, wobei das Mittel zum Variieren der Produktdurchsatzrate einen Drosselring umfasst, der am Einlass des ersten Hohlraumtransfermischers positioniert ist.

34. Vorrichtung nach einem der Ansprüche 24 bis 29, weiter umfassend einen zweiten Mischer mit einem zweiten Einlass, der mit dem zweiten Auslass des Extruders verbunden ist.

35. Vorrichtung nach Anspruch 34, wobei der zweite Mischer einen zweiten Hohlraumtransfermischer umfasst, der einen hohlen zylindrischen Stator und einen zylindrischen Rotor, der zur Rotation innerhalb des Stators angeordnet ist, umfasst, wobei jede der sich gegenüberliegenden zylindrischen Oberflächen des Rotors und des Stators eine Vielzahl von Hohlräumen einschließt, die so angeordnet sind, dass die Temperatur und der Druck, die auf den zweiten Strom eines Lebensmittelprodukts ausgeübt werden, in einem solchen Ausmaß erhöht werden, dass der zweite Strom eines Lebensmittelprodukts eine geringere Dichte beim Austreten aus einem Auslass der Vorrichtung als beim Eintreten in den zweiten Hohlraumtransfermischer aufweist.

36. Vorrichtung nach einem der Ansprüche 24 bis 29, wobei der Extruder einen dritten Auslass zum Bereitstellen eines dritten Stroms eines Lebensmittelprodukts aufweist.

37. Vorrichtung nach Anspruch 36, weiter umfassend einen dritten Mischer mit einem dritten Einlass, der mit dem dritten Auslass des Extruders verbunden ist.

38. Vorrichtung nach Anspruch 36, wobei der dritte Mischer einen dritten Hohlraumtransfermischer umfasst, der einen hohlen zylindrischen Stator und einen zylindrischen Rotor, der zur Rotation innerhalb des Stators angeordnet ist, umfasst, wobei jede der sich gegenüberliegenden zylindrischen Oberflächen des Rotors und des Stators eine Vielzahl von Hohlräumen einschließt, die so angeordnet sind, dass die Temperatur und der Druck, die auf den dritten Strom eines Lebensmittelprodukts ausgeübt werden, in einem solchen Ausmaß erhöht werden, dass der dritte Strom eines Lebensmittelprodukts eine geringere Dichte beim Austreten aus einem Auslass der Vorrichtung als beim Eintreten in den dritten Hohlraumtransfermischer aufweist.

39. Vorrichtung nach einem der Ansprüche 24 bis 38, wobei der erste Hohlraumtransfermischer einen vierten Einlass aufweist, durch den ein Additiv zum ersten Strom eines Lebensmittelprodukts zugegeben werden kann.

40. Vorrichtung nach Anspruch 34 oder 35, wobei der zweite Mischer einen fünften Einlass aufweist, durch den ein Additiv zum zweiten Strom eines Lebensmittelprodukts zugegeben werden kann.

41. Vorrichtung nach Anspruch 37 oder 38, wobei der dritte Mischer einen sechsten Einlass aufweist, durch den ein Additiv zum dritten Strom eines Lebensmittelprodukts zugegeben werden kann.

42. Vorrichtung nach einem der Ansprüche 39 bis 41, wobei wenigstens eines der Additive einen Lebensmittelfarbstoff umfasst.

43. Vorrichtung nach einem der Ansprüche 39 bis 42, wobei wenigstens eines der Additive einen Lebensmittelaromastoff umfasst.

44. Vorrichtung nach einem der Ansprüche 39 bis 43, wobei wenigstens eines der Additive ein Fett oder ein Öl umfasst.

## Revendications

1. Procédé de fabrication d'aliments comprenant les étapes consistant à :
extruder un premier et un deuxième courants de produits alimentaires respectivement d'un premier et d'un deuxième orifice d'évacuation d'une extrudeuse ; et
faire passer le premier courant de produit alimentaire à travers un premier mixeur de transfert à cavité.

2. Procédé selon la revendication 1, comprenant en outre l'étape consistant à :
faire passer le deuxième courant de produit alimentaire à travers un canal creux au centre du premier mixeur de transfert à cavité.

3. Procédé selon la revendication 2, comprenant en outre l'étape consistant à :
enduire le deuxième courant de produit alimentaire avec le premier courant de produit alimentaire de manière à produire un produit alimentaire coaxial.

4. Procédé selon l'une quelconque des revendications précédentes, comprenant en outre l'étape consistant à :
utiliser le premier mixeur de transfert à cavité pour réduire la densité du premier courant de produit.

5. Procédé selon la revendication 4, comprenant en outre l'étape consistant à :
appliquer une température et une pression accrues sur le premier courant de produit alimentaire de manière à ce que le premier courant de produit alimentaire soit moins dense lorsqu'il sort du mixeur de transfert à cavité que lorsqu'il entre dans le mixeur de transfert à cavité.

6. Procédé selon l'une quelconque des revendications précédentes, comprenant en outre l'étape consistant à :
ajouter un additif au premier courant de produit alimentaire.

7. Procédé selon la revendication 6, comprenant en outre l'étape consistant à :
mélanger l'additif au premier courant de produit alimentaire à l'aide du premier mixeur de transfert à cavité.

8. Procédé selon l'une quelconque des revendications précédentes, comprenant en outre l'étape consistant à :
faire passer le deuxième courant de produit alimentaire à travers un deuxième mixeur de transfert à cavité.

9. Procédé selon la revendication 8, comprenant en outre l'étape consistant à :
utiliser le deuxième mixeur de transfert à cavité pour réduire la densité du deuxième courant de produit.

10. Procédé selon la revendication 8 ou la revendication 9, comprenant en outre l'étape consistant à :
faire passer le premier courant de produit à travers le premier mixeur de transfert à cavité à une vitesse différente de la vitesse à laquelle on fait passer le courant de produit à travers le deuxième mixeur de transfert à cavité.

11. Procédé selon la revendication 9, comprenant en outre l'étape consistant à :
appliquer une température et une pression accrues sur le deuxième courant de produit alimentaire de manière à ce que le deuxième courant de produit alimentaire soit moins dense lorsqu'il sort du deuxième mixeur de transfert à cavité que lorsqu'il entre dans le deuxième mixeur de transfert à cavité.

12. Procédé selon l'une quelconque des revendications précédentes, comprenant en outre l'étape consistant à :
ajouter un additif au deuxième courant de produit alimentaire.

13. Procédé selon l'une quelconque des revendications 8 à 11, comprenant outre l'étape consistant à :
mélanger un additif au deuxième courant de produit alimentaire à l'aide du deuxième mixeur de transfert à cavité.

14. Procédé selon l'une quelconque des revendications précédentes, dans lequel le premier courant de produit alimentaire est extrudé directement à partir du premier orifice d'évacuation de l'extrudeuse.

15. Procédé selon l'une quelconque des revendications précédentes, dans lequel le deuxième courant de produit alimentaire est extrudé directement à partir du deuxième orifice d'évacuation de l'extrudeuse.

16. Procédé selon l'une quelconque des revendications précédentes, comprenant en outre l'étape consistant à :
extruder un troisième courant de produit alimentaire d'un troisième orifice d'évacuation de l'extrudeuse.

17. Procédé selon la revendication 16, dans lequel le troisième courant de produit alimentaire est extrudé directement à partir du troisième orifice d'évacuation de l'extrudeuse.

18. Procédé selon la revendication 16 ou la revendication 17, comprenant en outre l'étape consistant à :
faire passer le troisième courant de produit alimentaire à travers un troisième mixeur de transfert à cavité.

19. Procédé selon la revendication 18, comprenant en outre l'étape consistant à :
utiliser le troisième mixeur de transfert à cavité pour réduire la densité du troisième courant de produit.

20. Procédé selon la revendication 18 ou la revendication 19, comprenant en outre l'étape consistant à :
faire passer le troisième courant de produit à travers le troisième mixeur de transfert à cavité à une vitesse différente de la vitesse à laquelle on fait passer le premier courant de produit à travers le premier mixeur de transfert à cavité.

21. Procédé selon l'une quelconque des revendications 17 à 20, comprenant en outre l'étape consistant à :
appliquer une température et une pression accrues sur le troisième courant de produit alimentaire de manière à ce que le troisième courant de produit alimentaire soit moins dense lorsqu'il sort du troisième mixeur de transfert à cavité que lorsqu'il entre dans le troisième mixeur de transfert à cavité.

22. Procédé selon l'une quelconque des revendications 16 à 21, comprenant en outre l'étape consistant à :
ajouter un additif au troisième courant de produit alimentaire.

23. Procédé selon l'une quelconque des revendications 18 à 20, comprenant en outre l'étape consistant à :
mélanger un additif au troisième courant de produit alimentaire à l'aide du troisième mixeur de transfert à cavité.

24. Appareil pour la fabrication d'aliments comprenant :
une extrudeuse présentant un premier et un deuxième orifices d'évacuation destinés à évacuer respectivement un premier et un deuxième courants de produit alimentaire ; et
un premier mixeur de transfert à cavité présentant un premier orifice d'alimentation relié directement au premier orifice d'évacuation de l'extrudeuse.

25. Appareil selon la revendication 24, dans lequel l'extrudeuse est constituée d'une extrudeuse à double vis.

26. Appareil selon la revendication 24 ou la revendication 25, dans lequel le deuxième orifice d'évacuation est agencé de manière à ce que le deuxième courant de produit alimentaire passe à travers un canal creux au centre du premier mixeur de transfert à cavité.

27. Appareil selon la revendication 26, dans lequel le premier mixeur de transfert à cavité est agencé de manière à ce que le premier courant de produit alimentaire sorte du premier mixeur à cavité et enduise le deuxième courant de produit alimentaire de manière à produire un produit alimentaire coaxial.

28. Appareil selon l'une quelconque des revendications 24 à 27, dans lequel le premier mixeur de transfert à cavité est capable de réduire la densité du premier courant de produit.

29. Appareil selon la revendication 28, dans lequel le premier mixeur de transfert à cavité comprend un stator cylindrique creux et un rotor cylindrique agencé de manière à tourner dans le stator, chacune des surfaces cylindriques du rotor et du stator se faisant face comprenant une pluralité de cavités agencées de manière à ce que la température et la pression appliquées sur le premier courant de produit alimentaire soient accrues de manière à ce que la densité du premier courant de produit alimentaire soit inférieure lorsqu'il sort d'un orifice d'évacuation de l'appareil que lorsqu'il entre dans le mixeur de transfert à cavité.

30. Appareil selon la revendication 29, dans lequel les tolérances entre le stator et le rotor sont minimisées afin d'accroître la température et la pression exercées sur le premier courant de produit alimentaire.

31. Appareil selon l'une quelconque des revendications 24 à 30, comprenant en outre un moyen permettant de faire varier le débit du produit.

32. Appareil selon la revendication 31, dans lequel le moyen permettant de faire varier le débit du produit peut être utilisé pour faire varier le débit du produit pendant que l'appareil est en marche.

33. Appareil selon la revendication 31 ou 32, dans lequel le moyen permettant de faire varier le débit du produit comprend une bague d'étranglement placée à l'entrée du premier mixeur de transfert à cavité

34. Appareil selon l'une quelconque des revendications 24 à 29, comprenant en outre un deuxième mixeur présentant un orifice d'admission relié au deuxième orifice d'évacuation de l'extrudeuse.

35. Appareil selon la revendication 34, dans lequel le deuxième mixeur comprend un deuxième mixeur de transfert à cavité comprenant un stator cylindrique creux et un rotor cylindrique agencé de manière à tourner dans le stator, chacune des surfaces cylindriques du rotor et du stator se faisant face comprenant une pluralité de cavités agencées de manière à ce que la température et la pression appliquées sur le deuxième courant de produit alimentaire soient accrues de manière à ce que la densité du deuxième courant de produit alimentaire soit inférieure lorsqu'il sort d'un orifice d'évacuation de l'appareil que lorsqu'il entre dans le deuxième mixeur de transfert à cavité.

36. Appareil selon l'une quelconque des revendications 24 à 29, dans lequel l'extrudeuse a un troisième orifice d'évacuation destiné à produire un troisième courant de produit alimentaire.

37. Appareil selon la revendication 36, comprenant en outre un troisième mixeur présentant un troisième orifice d'admission relié au troisième orifice d'évacuation de l'extrudeuse.

38. Appareil selon la revendication 36, dans lequel le troisième mixeur comprend un troisième mixeur de transfert à cavité comprenant un stator cylindrique creux et un rotor cylindrique agencé de manière à tourner dans le stator, chacune des surfaces cylindriques du rotor et du stator se faisant face comprenant une pluralité de cavités agencées de manière à ce que la température et la pression appliquées sur le troisième courant de produit alimentaire soient accrues de manière à ce que la densité du troisième courant de produit alimentaire soit inférieure lorsqu'il sort d'un orifice d'évacuation de l'appareil que lorsqu'il entre dans le troisième mixeur de transfert à cavité.

39. Appareil selon l'une quelconque des revendications 24 à 38, dans lequel le premier mixeur de transfert à cavité présente un quatrième orifice d'admission à travers lequel un additif peut être ajouté au premier courant de produit alimentaire.

40. Appareil selon la revendication 34 ou 35, dans lequel le deuxième mixeur présente un cinquième orifice d'admission à travers lequel un additif peut être ajouté au deuxième courant de produit alimentaire.

41. Appareil selon la revendication 37 ou 38, dans lequel le troisième mixeur présente un sixième orifice d'admission à travers lequel un additif peut être ajouté au troisième courant de produit alimentaire.

42. Appareil selon l'une quelconque des revendications 39 à 41, dans lequel au moins un des additifs comprend un colorant alimentaire.

43. Appareil selon l'une quelconque des revendications 39 à 42, dans lequel au moins un des additifs comprend un arôme alimentaire.

44. Appareil selon l'une quelconque des revendications 39 à 43, dans lequel au moins un des additifs comprend une graisse ou une huile.
